# EUROPÄISCHE PATENTSCHRIFT

(11) **EP 3 729 051 B1**
(45) Veröffentlichungstag und Bekanntmachung des Hinweises auf die Patenterteilung: **15.03.2023**
(21) Anmeldenummer: 18811000.1
(22) Anmeldetag: 26.11.2018
(51) Int. Cl.: G01N 15/06, F02D 41/14, F02D 41/22, G01N 15/00, G01N 33/00, G01R 31/28

(54) **VERFAHREN ZUR ERFASSUNG VON PARTIKELN EINES MESSGASES IN EINEM MESSGASRAUM UND SENSORANORDNUNG ZUR ERFASSUNG VON PARTIKELN EINES MESSGASES IN EINEM MESSGASRAUM**
METHOD FOR DETECTING PARTICLES OF A MEASUREMENT GAS IN A MEASUREMENT GAS CHAMBER, AND SENSOR ASSEMBLY FOR DETECTING PARTICLES OF A MEASUREMENT GAS IN A MEASUREMENT GAS CHAMBER
PROCÉDÉ DE DÉTECTION DE PARTICULES D'UN GAZ DE MESURE DANS UNE CHAMBRE DE GAZ DE MESURE ET ENSEMBLE CAPTEUR POUR LA DÉTECTION DE PARTICULES D'UN GAZ DE MESURE DANS UNE CHAMBRE DE GAZ DE MESURE

(30) Priorität: 19.12.2017 DE 102017223292; 17.05.2018 DE 102018207793
(43) Veröffentlichungstag der Anmeldung: 28.10.2020
(73) Patentinhaber: Robert Bosch GmbH, 70442 Stuttgart (DE)
(72) Erfinder: KLENK, Mathias, 74369 Loechgau (DE)
(86) Internationale Anmeldenummer: PCT/EP2018/082605
(87) Internationale Veröffentlichungsnummer: WO 2019/120895

(56) Entgegenhaltungen:
- EP-A1- 2 492 481
- DE-A1-102009 033 232

## Beschreibung

### Stand der Technik

Aus dem Stand der Technik ist eine Vielzahl von Verfahren zur Erfassung von Partikeln eines Messgases in einem Messgasraum und Sensoranordnungen zur Erfassung von Partikeln eines Messgases in einem Messgasraum bekannt. Beispielsweise kann es sich bei dem Messgas um ein Abgas einer Brennkraftmaschine handeln. Insbesondere kann es sich bei den Partikeln um Ruß- oder Staubpartikel handeln.

Zwei oder mehrere metallische Elektroden können auf einem elektrisch isolierenden Träger angebracht sein. Die sich unter Einwirkung einer Spannung anlagernden Teilchen, insbesondere die Rußpartikel, bilden in einer sammelnden Phase des Sensorelements elektrisch leitfähige Brücken zwischen den beispielsweise als kammartig ineinandergreifende Interdigitalelektroden ausgestalteten Elektroden und schließen diese dadurch kurz. In einer regenerierenden Phase werden die Elektroden üblicherweise mit Hilfe eines integrierten Heizelementes freigebrannt. In der Regel werten die Partikelsensoren die aufgrund der Partikelanlagerung geänderten elektrischen Eigenschaften einer Elektrodenstruktur aus. Es kann beispielsweise ein abnehmender Widerstand oder ein zunehmender Strom bei konstanter angelegter Spannung gemessen werden.

Nach diesem Prinzip arbeitende Sensoranordnungen werden im Allgemeinen als resistive Sensoren bezeichnet und existieren in einer Vielzahl von Ausführungsformen, wie z.B. aus DE 10 2005 053 120 A1, DE 103 19 664 A1, DE10 2004 0468 82A1, DE 10 2006 042 362 A1, DE 103 53 860 A1, DE 101 49 333 A1 und WO 2003/006976 A2 bekannt. Die als Rußsensoren ausgestalteten Sensoranordnungen werden üblicherweise zur Überwachung von Diesel-Partikelfiltern eingesetzt. Im Abgastrakt einer Brennkraftmaschine sind die Partikelsensoren der beschriebenen Art in der Regel in ein Schutzrohr aufgenommen, das gleichzeitig beispielsweise die Durchströmung des Partikelsensors mit dem Abgas erlaubt.

Aufgrund eines steigenden Umweltbewusstseins und auch zum Teil bedingt durch gesetzliche Vorschriften muss der Rußausstoß während des Fahrbetriebes überwacht und die Funktionalität der Überwachung sichergestellt werden. Diese Art der Überwachung der Funktionalität wird im Allgemeinen als On-board-Diagnose bezeichnet. Vorrichtungen und Verfahren zur Eigendiagnose eines Partikelsensors sind beispielsweise aus DE 10 2009 028 239 A1, DE 10 2009 028 283 A1, DE 2007 046 096 A1 und US 2012/0119759 A1 bekannt.

Trotz der Vorteile der aus dem Stand der Technik bekannten Verfahren zur Erfassung von Partikeln eines Messgases in einem Messgasraum und der aus dem Stand der Technik bekannten Sensoranordnungen zur Erfassung von Partikeln eines Messgases in einem Messgasraum beinhalten die Verfahren und Sensoranordnungen noch Verbesserungspotential. So ist insbesondere das Erkennen und/oder Identifizieren von Fehlern, insbesondere von elektrischen Fehlern an der Elektrodenstruktur, in der Regel aufwändig und/oder langwierig. Beispielsweise ist häufig im Rahmen einer Identifizierung des elektrischen Fehlers ein Freibrennen des Sensorelements nötig. Insbesondere dadurch kann es nach einem Auftreten des elektrischen Fehlers zu einer zeitlichen Verzögerung einer entsprechenden Fehlermeldung kommen. So ist insbesondere die gesetzlich geforderte Eigenüberwachung des Rußsensors hinsichtlich elektrischer Funktionalität, wie beispielsweise eine Überwachung mit mindestens 2 Hz in der Regel schwierig umzusetzen. Weiterhin ist typischerweise ein Unterscheiden verschiedener Fehler, insbesondere verschiedener elektrischer Fehler, nur schwer oder überhaupt nicht möglich. Weitere Verfahren sind bekannt aus der DE 10 2009 033 232 A1 und der EP 2 492 481 A1. In der DE10 2009 033 232 ist ein Verfahren zur Erfassung von Partikeln eines Messgases in einem Messgasraum offenbart, wobei mindestens ein Sensorelement verwendet wird, wobei das Sensorelement mindestens eine Elektrodenstruktur umfasst, wobei die Elektrodenstruktur mindestens zwei Elektrodeneinrichtungen aufweist, wobei das Verfahren die folgenden Schritte umfasst:
a) Betreiben des Sensorelements in mindestens einem Messmodus, umfassend:
   i. Beaufschlagen der Elektrodenstruktur mit mindestens einer Messspannung; und
   ii. Erfassen mindestens eines Messsignals an der Elektrodenstruktur wobei das Messsignal durch die Partikel beeinflussbar ist.

### Offenbarung der Erfindung

In Rahmen der vorliegenden Erfindung werden daher ein Verfahren und eine Sensoranordnung zur Erfassung von Partikeln eines Messgases in einem Messgasraum vorgeschlagen. Unter einer "Sensoranordnung" kann im Rahmen der vorliegenden Erfindung grundsätzlich eine beliebige Vorrichtung verstanden werden, welche eingerichtet ist, um mindestens eine Messgröße des Messgases zu erfassen. Unter einer "Sensoranordnung zur Erfassung von Partikeln eines Messgases" kann dementsprechend im Rahmen der vorliegenden Erfindung grundsätzlich eine beliebige Vorrichtung verstanden werden, welche geeignet ist, die Partikel in dem Messgas qualitativ und/oder quantitativ zu erfassen und welche beispielsweise mit Hilfe einer geeigneten Steuereinheit und geeignet ausgestalteten Elektroden mindestens ein elektrisches Messsignal entsprechend der erfassten Partikel erzeugen kann, wie beispielsweise eine Spannung oder einen Strom. Bei den erfassten Partikeln kann es sich insbesondere um Rußpartikel und/oder Staubpartikel handeln. Hierbei können DC-Signale und/oder AC-Signale verwendet werden. Des Weiteren kann beispielsweise zur Signalauswertung aus der Impedanz ein resistiver Anteil und/oder ein kapazitiver Anteil verwendet werden.

Das Verfahren und die Sensoranordnung können insbesondere zum Einsatz in einem Kraftfahrzeug eingerichtet sein. Insbesondere kann es sich bei dem Messgas um ein Abgas des Kraftfahrzeugs handeln. Auch andere Gase und Gasgemische sind grundsätzlich möglich. Bei dem Messgasraum kann es sich grundsätzlich um einen beliebigen, offenen oder geschlossenen Raum handeln, in welchem das Messgas aufgenommen ist und/oder welcher von dem Messgas durchströmt wird. Beispielsweise kann es sich bei dem Messgasraum um einen Abgastrakt einer Brennkraftmaschine, beispielsweise eines Verbrennungsmotors, handeln.

Das Verfahren zur Erfassung von Partikeln eines Messgases in einem Messgasraum verwendet mindestens ein Sensorelement, wobei das Sensorelement mindestens eine Elektrodenstruktur umfasst, wobei die Elektrodenstruktur mindestens zwei Elektrodeneinrichtungen aufweist. Das Verfahren umfasst die folgenden Schritte, bevorzugt in der angegebenen Reihenfolge. Auch eine andere Reihenfolge ist grundsätzlich möglich. Weiterhin können einer oder mehrere oder alle der Verfahrensschritte auch wiederholt durchgeführt werden. Weiterhin können zwei oder mehrere der Verfahrensschritte auch ganz oder teilweise zeitlich überlappend oder gleichzeitig durchgeführt werden. Das Verfahren kann, zusätzlich zu den genannten Verfahrensschritten auch weitere Verfahrensschritte umfassen.

Die Verfahrensschritte sind:
a) Betreiben des Sensorelements (110) in mindestens einem Messmodus, umfassend:
   i. Beaufschlagen der Elektrodenstruktur (112) mit mindestens einer Messspannung; und
   ii. Erfassen mindestens eines Messsignals an der Elektrodenstruktur (112) wobei das Messsignal durch die Partikel beeinflussbar ist; und
   iii. Vergleichen des Messsignals mit dem vorbestimmten Messsignalschwellwert und Erzeugen mindestens einer Information bezüglich eines Funktionszustands des Sensorelements (110), wobei das Sensorelement (110) als intakt eingeordnet wird, wenn das Messsignal kleiner oder maximal gleich dem vorbestimmten Messsignalschwellwert ist, wobei das Sensorelement (110) als defekt eingeordnet wird, wenn das Messsignal den vorbestimmten Messsignalschwellwert überschreitet;
   und, wenn das Messsignal in Schritt a) ii. den vorbestimmten Messsignalschwellwert überschreitet, weiterhin die folgenden Schritte umfasst:
b) Betreiben des Sensorelements (110) in mindestens einem Diagnosemodus, umfassend:
   i. Beaufschlagen der Elektrodenstruktur (112) mit mindestens einer Diagnosespannung, wobei die Diagnosespannung kleiner ist als die Messspannung;
   ii. Erfassen mindestens eines Diagnosesignals an der Elektrodenstruktur (112); und

Auswerten des Diagnosesignals durch Vergleich des Diagnosesignals mit mindestens zwei Diagnoseschwellwerten und Erzeugen mindestens einer Information bezüglich eines Defektzustands des Sensorelements (110). Unter einem "Sensorelement" kann im Rahmen der vorliegenden Erfindung grundsätzlich eine beliebige Vorrichtung verstanden werden, welche als Funktionseinheit, beispielsweise für eine Sensoranordnung, dienen kann und als solche mindestens ein Messsignal erzeugen kann, beispielsweise das mindestens eine elektrische Messsignal entsprechend der erfassten Partikel. Das Sensorelement kann daher insbesondere Teil einer bereits oben kurz beschriebenen und weiter unten noch genauer ausgeführten Sensoranordnung sein. Unter einer "Elektrodenstruktur" kann im Rahmen der vorliegenden Erfindung grundsätzlich eine beliebige Vorrichtung verstanden werden, welche mindestens zwei Elektrodeneinrichtungen umfasst. Insbesondere kann die Elektrodenstruktur genau zwei Elektrodeneinrichtungen umfassen, welche insbesondere auch als erste Elektrodeneinrichtung und als zweite Elektrodeneinrichtung bezeichnet werden können. Insbesondere können die mindestens zwei Elektrodeneinrichtungen, insbesondere Teile davon, wie beispielsweise weiter unten noch näher beschriebene Elektrodenfinger, eine Anordnung zueinander aufweisen, welche ein wesentlicher Bestandteil der Elektrodenstruktur sein kann. Weiterhin können die Elektrodeneinrichtungen jeweils mindestens eine Elektrodenform aufweisen, welche ebenfalls ein wesentlicher Bestandteil der Elektrodenstruktur sein kann. Unter einer "Elektrodeneinrichtung" kann im Rahmen der vorliegenden Erfindung grundsätzlich ein beliebiger elektrischer Leiter verstanden werden, der für eine Strommessung und/oder eine Spannungsmessung geeignet ist, und/oder welcher mindestens ein mit der Elektrodeneinrichtung in Kontakt stehendes Element mit einer Spannung und/oder einem Strom beaufschlagen kann.

Die Elektrodeneinrichtung kann insbesondere mindestens einen Elektrodenfinger aufweisen. Unter einem "Elektrodenfinger" kann im Rahmen der vorliegenden Erfindung grundsätzlich eine beliebige Ausformung der Elektrodeneinrichtung verstanden werden, deren Abmessung in einer Dimension eine Abmessung in mindestens einer anderen Dimension deutlich überschreitet, beispielsweise mindestens um einen Faktor 2, vorzugsweise mindestens um einen Faktor 3, besonders bevorzugt mindestens um einen Faktor 5. Der Elektrodenfinger kann insbesondere eine Elektrodenfingerform aufweisen. Beispielsweise kann die Elektrodenfingerform mindestens eine der folgenden Formen umfassen: eine Mäanderform; eine Schlangenform; eine S-Form; eine Windung; eine Biegung; eine Schleife, insbesondere eine offene oder geschlossene Schleife; eine Schlaufe, insbesondere eine offene oder geschlossene Schlaufe. Insbesondere kann die erste Elektrodeneinrichtung eine Vielzahl von mindestens zwei ersten Elektrodenfingern aufweisen und die zweite Elektrodeneinrichtung kann eine Vielzahl von mindestens 2 zweiten Elektrodenfingern aufweisen. Insbesondere können die Elektrodenfinger der ersten Elektrodeneinrichtung und die Elektrodenfinger der zweiten Elektrodeneinrichtung kammartig ineinander greifen. Eine Elektrodenstruktur umfassend eine erste und eine zweite Elektrodeneinrichtung mit kammartig ineinander greifenden Elektrodenfingern kann auch als Interdigitalelektrode bezeichnet werden.

Unter einem "Messmodus" kann im Rahmen der vorliegenden Erfindung grundsätzlich eine Betriebsart einer beliebigen Vorrichtung verstanden werden, in der die Vorrichtung in der Lage ist, ein Messsignal zu erzeugen. Unter einer "Messspannung" kann im Rahmen der vorliegenden Erfindung grundsätzlich eine beliebige elektrische Potentialdifferenz verstanden werden, die ein Erzeugen eines Messsignals erlaubt. Unter einem "Messsignal" kann im Rahmen der vorliegenden Erfindung grundsätzlich ein beliebiges elektrisches Signal verstanden werden, welches bei intaktem Sensorelement einen Rückschluss auf mindestens eine Eigenschaft der zu erfassenden Partikel erlaubt, beispielsweise auf eine Konzentration der Partikel in dem Messgas. Alternativ oder zusätzlich kann das Messsignal auch mindestens einen Rückschluss auf einen Funktionszustand des Sensorelements erlauben. Bei dem Messsignal kann es sich insbesondere um ein Stromsignal, ein Spannungssignal oder ein Widerstandssignal handeln. Auch andere elektrische Signale sind grundsätzlich denkbar. Insbesondere kann es sich bei dem Messsignal um ein einen Messstrom zwischen den Elektrodeneinrichtungen quantifizierendes Messsignal handeln. Unter einem "Messstrom" kann im Rahmen der vorliegenden Erfindung grundsätzlich ein beliebiger zwischen der ersten Elektrodeneinrichtung und der zweiten Elektrodeneinrichtung aufgrund der Messspannung fließender elektrischer Strom verstanden werden. Das Messsignal ist durch die Partikel beeinflussbar. Unter dem Begriff "beeinflussbar" kann im Rahmen der vorliegenden Erfindung grundsätzlich verstanden werden, dass das Messsignal gemäß mindestens einer Eigenschaft der zu erfassenden Partikel veränderbar ist. So kann beispielsweise eine Erhöhung der vorhandenen Partikelkonzentration über eine häufigere Partikelanlagerung an der Elektrodenstruktur zu einer Erhöhung des zwischen den Elektrodeneinrichtungen fließenden Messstroms führen.

Unter einem "Diagnosemodus" kann im Rahmen der vorliegenden Erfindung grundsätzlich ein eine Betriebsart einer beliebigen Vorrichtung verstanden werden, in der die Vorrichtung in der Lage ist, ein Diagnosesignal zu erzeugen. Unter einer "Diagnosespannung" kann im Rahmen der vorliegenden Erfindung grundsätzlich eine beliebige an der Elektrodenstruktur, insbesondere an den zwei Elektrodeneinrichtungen, anliegende elektrische Potentialdifferenz verstanden werden, die ein Erzeugen eines Diagnosesignals an der Elektrodenstruktur erlaubt. Insbesondere kann die Diagnosespannung um mindestens einen Faktor 2, bevorzugt um mindestens einen Faktor 4, mehr bevorzugt um mindestens einen Faktor 5 und besonders bevorzugt um mindestens einen Faktor 10 geringer sein als die Messspannung. Insbesondere kann die Messspannung 20 V bis 100 V, bevorzugt 40 V bis 50 V, mehr bevorzugt 44 V bis 46 V und besonders bevorzugt 45,6 V betragen. Insbesondere kann die Diagnosespannung 3 V bis 10 V, bevorzugt 4 V bis 6 V und besonders bevorzugt 5 V betragen. Die Elektrodenstruktur kann insbesondere mithilfe mindestens einer weiter unten noch näher beschriebenen Spannungsquelle mit der Diagnosespannung beaufschlagt werden. Dabei kann die Beaufschlagung direkt oder auch indirekt erfolgen. Insbesondere kann die Spannungsquelle eine Vielzahl von elektrischen Bauelementen umfassen, insbesondere eine oder mehrere Batterien, einen oder mehrere Aufwärtswandler, einen oder mehrere Schalter, einen oder mehrere Dioden und auch weitere, hier nicht genannte elektrische Bauelemente. Insbesondere kann die Spannungsquelle zunächst eine Quellspannung erzeugen. Insbesondere kann die Quellspannung von der Diagnosespannung abweichen. Beispielsweise kann die Quellspannung die Diagnosespannung überschreiten. Insbesondere kann die Quellspannung der Spannungsquelle mithilfe des mindestens einen elektrischen Bauelements, beispielsweise mithilfe des mindestens einen Schalters und/oder der mindestens einen Diode, in die Diagnosespannung umgewandelt, insbesondere auf die Diagnosespannung herabgesetzt, werden, mit welcher die Elektrodenstruktur beaufschlagt wird. Insbesondere kann eine Versorgungsspannung und/oder eine Referenzspannung des Analog-Digital-Wandlers die Quellspannung darstellen. Weiterhin kann die Diagnosespannung von der Versorgungsspannung und/oder der Referenzspannung des Analog-Digital-Wandlers abgeleitet werden und durch nachfolgende Bauteile wie den Schalter und/oder die Diode reduziert werden, sodass an der Elektrodenstruktur, insbesondere an den beiden Elektrodeneinrichtungen, eine Diagnosespannung anliegt, welche kleiner oder gleich einem Maximalwert eines Erfassungsbereichs des Analog-Digital Wandlers ist. Insbesondere kann die Diagnosespannung die Quellspannung um einen Wert von 0,7 V bis 1,0 V unterschreiten.

Unter einem "Diagnosesignal" kann im Rahmen der vorliegenden Erfindung grundsätzlich ein beliebiges elektrisches Signal verstanden werden, welches einen Rückschluss auf ein Vorliegen oder eine Abwesenheit mindestens eines Defekts in dem Sensorelement, beispielsweise in der Elektrodenstruktur, erlaubt. Bei dem Diagnosesignal kann es sich insbesondere um ein Stromsignal, ein Spannungssignal oder ein Widerstandssignal handeln. Beispielsweise kann es sich bei dem Defekt um einen Defekt der Elektrodenstruktur handeln, insbesondere kann es sich um einen Kurzschluss zwischen den beiden Elektrodeneinrichtungen oder zwischen der einen der beiden Elektrodeneinrichtungen und einem weiteren Element, beispielsweise der Masse oder einem Element des Sensorelements oder einem Element der Sensoranordnung handeln. Insbesondere kann es sich bei dem Element der Sensoranordnung um ein elektrisches Bauteil handeln, beispielsweise um die weiter unten noch näher beschriebene Spannungsquelle, insbesondere um eine Batterie eines Kraftfahrzeugs. Weiterhin kann es sich bei dem Defekt insbesondere um eine Überladung der Elektrodenstruktur mit Partikeln handeln. Bei dem Diagnosesignal kann es sich insbesondere um ein einen Diagnosestrom zwischen den Elektrodeneinrichtungen quantifizierendes Diagnosesignal handeln. Unter einem "Diagnosestrom" kann im Rahmen der folgenden Erfindung grundsätzlich ein beliebiger zwischen der ersten Elektrodeneinrichtung und der zweiten Elektrodeneinrichtung aufgrund der Diagnosespannung fließender elektrischer Strom verstanden werden. Unter einem "Diagnoseschwellwert" kann im Rahmen der vorliegenden Erfindung grundsätzlich ein beliebiger Wert einer elektrischen Messgröße verstanden werden, beispielsweise eines Stroms, einer Spannung oder eines Widerstands, wobei aus dem Überschreiten, dem Unterschreiten und/oder dem Annehmen des Werts durch das Diagnosesignal ein Rückschluss auf das Vorliegen oder die Abwesenheit mindestens eines Defekts in dem Sensorelement, beispielsweise in der Elektrodenstruktur, ableitbar ist. Unter einem "Defektzustand" kann im Rahmen der vorliegenden Erfindung grundsätzlich ein beliebiger Zustand des Sensorelements, verstanden werden, in dem das Sensorelement, mindestens einen Schaden oder Fehler oder Defekt aufweist, der eine Funktionstüchtigkeit des Sensorelements, beeinträchtigt. Insbesondere kann das Sensorelement, das einen Defektzustand aufweist, mindestens einen der oben bereits beschriebenen Defekte aufweisen. Insbesondere kann das Sensorelement, das einen Defektzustand aufweist, beispielsweise indem es einen der oben bereits beschriebenen Defekte aufweist, auch als defekt bezeichnet werden.

Zum Erfassen des Messsignals und des Diagnosesignals wird erfindungsgemäß mindestens eine Messvorrichtung verwendet, die mindestens einen Analog-Digital-Wandler umfasst, wobei die Diagnosespannung kleiner oder gleich dem Maximalwert des Erfassungsbereichs des Analog-Digital-Wandlers ist.

Weiterhin kann der Maximalwert des Erfassungsbereichs auch als Referenzspannung des Analog-Digital-Wandlers bezeichnet werden. Weiterhin kann der Erfassungsbereich Analog-Digital-Wandlers als Referenzbereich des Analog-Digital-Wandlers bezeichnet werden. Insbesondere kann der Maximalwert des Erfassungsbereichs des Analog-Digital-Wandlers 5 V betragen. Alternativ kann der Maximalwert des Erfassungsbereichs des Analog-Digital-Wandlers auch einen anderen Wert aufweisen. Insbesondere kann der Maximalwert des Erfassungsbereichs des Analog-Digital-Wandlers beispielsweise 3,3 V betragen. Auch andere Werte sind grundsätzlich denkbar. Insbesondere kann der Maximalwert des Erfassungsbereichs des Analog-Digital-Wandlers 3 V bis 10 V, bevorzugt 4 V bis 6 V und besonders bevorzugt 5 V betragen. Insbesondere kann der Maximalwert des Erfassungsbereichs des Analog-Digital-Wandlers 5 V betragen und die Diagnosespannung kann 2,5 V bis 6 V, bevorzugt 3,5 V bis 5,5 V, besonders bevorzugt 4,0 V bis 4,3 V betragen.

Das Verfahren zur Erfassung von Partikeln eines Messgases in einem Messgasraum umfasst die oben aufgeführten Schritte a) und b) mit den genannten Unterschritten. Unter einem "Messsignalschwellwert" kann im Rahmen der vorliegenden Erfindung grundsätzlich ein beliebiger Wert einer elektrischen Messgröße, insbesondere des Messsignals, verstanden werden, beispielsweise eines Stroms, einer Spannung oder eines Widerstands, wobei aus dem Überschreiten, dem Unterschreiten und/oder dem Annehmen des Werts durch das Messsignal ein Rückschluss auf das Vorliegen oder die Abwesenheit mindestens eines Defekts in dem Sensorelement, beispielsweise in der Elektrodenstruktur, ableitbar ist. Insbesondere kann der vorbestimmte Messsignalschwellwert im Wesentlichen gleich dem Maximalwert des Erfassungsbereichs des Analog-Digital-Wandlers sein. Unter dem Begriff "im Wesentlichen gleich" kann im Rahmen der vorliegenden Erfindung grundsätzlich verstanden werden, dass zwei Werte nicht oder nur geringfügig voneinander abweichen. Die zwei Werte können insbesondere um 0 % bis 25 %, bevorzugt um 0 % bis 20 %, mehr bevorzugt um 0 % bis 10 % und besonders bevorzugt um 0 % bis 5 % voneinander abweichen. Weiterhin kann der vorbestimmte Messsignalschwellwert 4,0 V bis 5,0 V oder 1 mA bis 10 mA oder 0

Weiterhin kann das Messsignal mindestens ein Signal sein ausgewählt aus der Gruppe bestehend aus: einem Spannungssignal; einem Stromsignal; einem Widerstandssignal. Ferner kann auch das Diagnosesignal ausgewählt sein aus der Gruppe bestehend aus: einem Spannungssignal; einem Stromsignal; einem Widerstandssignal. Insbesondere kann das Diagnosesignal mindestens ein Signal umfassen ausgewählt aus der Gruppe bestehend aus: einem Spannungssignal oder einem Stromsignal oder einem Widerstandssignal zwischen einer der mindestens zwei Elektrodeneinrichtungen und der mindestens einen Spannungsquelle, insbesondere der Batterie des Kraftfahrzeugs; einem Spannungssignal oder einem Stromsignal oder einem Widerstandssignal zwischen einer der beiden Elektrodeneinrichtungen und der Masse; einem Spannungssignal oder einem Stromsignal oder einem Widerstandssignal zwischen den beiden Elektrodeneinrichtungen.

Das Verfahren zur Erfassung von Partikeln eines Messgases in einem Messgasraum umfasst den Schritt b) iii). Weiterhin kann das Verfahren genau zwei Diagnoseschwellwerte umfassen. Weiterhin können die Diagnoseschwellwerte D1 und D2 zwei Spannungswerte sein, wobei der Diagnoseschwellwert D1 kleiner oder gleich dem Maximalwert des Erfassungsbereichs des Analog-Digital-Wandlers sein kann, wobei der Diagnoseschwellwert D2 kleiner als der Maximalwert des Erfassungsbereichs des Analog-Digital-Wandlers und kleiner als der Diagnoseschwellwert D1 sein kann.

Erfindungsgemäß erfolgt das Erzeugen mindestens einer Information bezüglich des Defektzustands des Sensorelements in Schritt b) iii. mithilfe des folgenden Schemas:
- das Sensorelement weist einen Kurzschluss zwischen der einen der mindestens zwei Elektrodeneinrichtungen und der Spannungsquelle, insbesondere der Batterie des Kraftfahrzeugs, auf, wenn das Diagnosesignal größer ist als der Diagnoseschwellwert D1;
- das Sensorelement weist einen Kurzschluss zwischen den beiden Elektrodeneinrichtungen auf, wenn das Diagnosesignal zwischen D2 und D1 liegt; und
- das Sensorelement weist eine Überladung der Elektrodenstruktur mit den Partikeln auf, wenn das Diagnosesignal kleiner als der zweite Diagnoseschwellwert D2 ist.

Insbesondere können die Diagnoseschwellwerte D1 und D2 jeweils einem der durch sie begrenzten Bereiche zugeordnet werden. Insbesondere kann der Diagnoseschwellwert D1 4,5 V betragen und der Diagnoseschwellwert D2 kann 3,9 V betragen. In einem besonders bevorzugten Ausführungsbeispiel kann die Diagnosespannung gleich dem Maximalwert des Erfassungsbereichs des Analog-Digital-Wandlers sein, der Maximalwert des Erfassungsbereichs des Analog-Digital-Wandlers kann 5 V betragen, der Diagnoseschwellwert D1 kann 4,5 V betragen und der Diagnoseschwellwert D2 kann 3,9 V betragen.

In einem weiteren Aspekt der vorliegenden Erfindung wird eine Sensoranordnung zur Erfassung von Partikeln eines Messgases in einem Messgasraum vorgeschlagen. Die Sensoranordnung umfasst mindestens ein Sensorelement und mindestens eine Steuereinheit, wobei das Sensorelement mindestens eine Elektrodenstruktur umfasst. Die Elektrodenstruktur weist mindestens zwei Elektrodeneinrichtungen auf. Die Steuereinheit ist eingerichtet, um ein Verfahren nach einem der vorhergehenden Ansprüche durchzuführen. Dementsprechend kann für Definitionen und optionale Ausgestaltungen weitgehend auf die Beschreibung des Verfahrens verwiesen werden.

Die Steuereinheit kann die mindestens eine Spannungsquelle aufweisen, wobei die Spannungsquelle eingerichtet sein kann, um die Elektrodenstruktur mit der mindestens einen Messspannung und mit der mindestens einen Diagnosespannung zu beaufschlagen. Weiterhin kann die Steuereinheit mindestens eine Messvorrichtung aufweisen, wobei die Messvorrichtung eingerichtet ist, um das mindestens eine Messsignal an der Elektrodenstruktur zu erfassen. Weiterhin kann die Messvorrichtung eingerichtet sein, um das mindestens eine Diagnosesignal an der Elektrodenstruktur zu erfassen. Insbesondere kann die Elektrodenstruktur eine erste Elektrodeneinrichtung und eine zweite Elektrodeneinrichtung umfassen. Die Messvorrichtung kann mindestens einen mit der ersten Elektrodeneinrichtung oder der zweiten Elektrodeneinrichtung verbundenen Messwiderstand und mindestens einen mit dem Messwiderstand verbundenen Analog-Digital-Wandler aufweisen. Ferner kann die Steuereinheit weiterhin mindestens eine weitere Messvorrichtung umfassen, wobei die weitere Messvorrichtung eingerichtet ist, um die Messspannung zu erfassen.

Weiterhin kann die mindestens eine Spannungsquelle mindestens ein Element aufweisen ausgewählt aus der Gruppe bestehend aus: einer Batterie; einem Aufwärtswandler; einem elektrischen Schalter. Die Spannungsquelle kann ferner weitere Elemente, insbesondere elektrische Bauelemente, umfassen. Bei der Batterie kann es sich insbesondere um die Batterie eines Kraftfahrzeugs handeln. Unter einem "Aufwärtswandler" kann im Rahmen der vorliegenden Erfindung grundsätzlich ein Schaltkreis verstanden werden, wobei ein Betrag einer Ausgangsspannung stets größer ist als ein Betrag einer Eingangsspannung. Insbesondere kann der Aufwärtswandler als Gleichspannungswandler ausgeprägt sein. Der Aufwärtswandler kann auch als Hochsetzsteller, Boost-Converter oder Step-Up-Converter bezeichnet werden. Der Schalter kann insbesondere einen Transistor, einen Metal-Oxid-Semiconductor Field-Effect Transistor (MOSFET) oder ein Relais umfassen. Insbesondere kann die Elektrodeneinrichtung durch dieselbe Spannungsquelle mit der Messspannung und der Diagnosespannung beaufschlagbar sein. Alternativ oder zusätzlich kann die Sensoranordnung mindestens zwei Spannungsquellen aufweisen. Insbesondere kann die Sensoranordnung mindestens eine Messspannungsquelle und eine Diagnosespannungsquelle aufweisen, wobei die Messspannungsquelle eingerichtet ist, um die Elektrodenstruktur mit der mindestens einer Messspannung zu beaufschlagen, wobei die Diagnosespannungsquelle eingerichtet ist, um die Elektrodenstruktur mit mindestens einer Diagnosespannung zu beaufschlagen.

### Vorteile der Erfindung

Das erfindungsgemäße Verfahren und die erfindungsgemäße Vorrichtung weisen gegenüber bekannten Verfahren und Vorrichtungen zahlreiche Vorteile auf. So kann es beispielsweise möglich sein, den Funktionszustand des Sensorelements, im Vergleich zum Stand der Technik schneller zu überprüfen und/oder zu erkennen. Weiterhin kann es möglich sein, einen Defekt des Sensorelements, beispielsweise Fehlerfälle der Interdigitalelektrode, im Vergleich zum Stand der Technik schneller zu überprüfen und/oder zu erkennen. Weiterhin kann es möglich sein, unterschiedliche Defekte des Sensorelements, beispielsweise Fehlerfälle der Interdigitalelektrode, eindeutig zu erkennen und/oder voneinander zu unterscheiden. Insbesondere kann es dadurch möglich sein, dass mithilfe des erfindungsgemäßen Verfahrens und/oder der erfindungsgemäßen Vorrichtung gesetzliche Forderungen zur elektrischen Diagnose, insbesondere zur On-board-Diagnose, besser eingehalten werden können.

Weiterhin kann es möglich sein, dass durch das erfindungsgemäße Verfahren und/oder die erfindungsgemäße Vorrichtung ein Software-Aufwand und/oder ein Applikationsaufwand im Vergleich zum Stand der Technik reduziert werden kann. So kann es möglich sein, in einem Fehlerfall durch ein Umschalten von der Messspannung, insbesondere einer Hochspannung, wie beispielsweise 45,6 V, auf die kleinere Diagnosespannung, insbesondere eine niedrigere Spannung wie zum Beispiel 5 V, ein Diagnosesignal zu erzeugen, das mit einem verfügbaren Analog-Digital-Wandler gemessen werden kann. Dadurch kann es möglich sein, dass Defekte, insbesondere einzelne Fehlerfälle, eindeutig erkannt und/oder voneinander unterschieden werden können. Dadurch kann es möglich sein, dass ein Software-Aufwand, beispielsweise für zusätzliche Diagnoseschritte wie eine Sensorregeneration zum Abbrennen von starken Verrußungen, reduziert werden kann. Insbesondere kann es dadurch möglich sein, dass eine Information bezüglich eines Defektzustands des Sensorelements, insbesondere ein Diagnoseergebnis, im Vergleich zum Stand der Technik früher bereitgestellt wird.

Ferner kann es möglich sein, das erfindungsgemäße Verfahren anhand eines Flussdiagramms auszuwerten.

### Kurze Beschreibung der Zeichnungen

Weitere Einzelheiten und optionale Merkmale der Erfindung sind in den Ausführungsbeispielen dargestellt, welche in den nachfolgenden Zeichnungen schematisch gezeigt sind.

Es zeigen:
- Figur 1: ein Flussdiagramm eines erfindungsgemäßen Verfahrens zur Erfassung von Partikeln eines Messgases in einem Messgasraum; und
- Figuren 2A, 2B und 2C: jeweils ein schematisch dargestellter Ausschnitt aus einem Sensorelement (2B) oder aus einer Steuereinheit einer erfindungsgemäßen Sensoranordnung (2A und 2C).

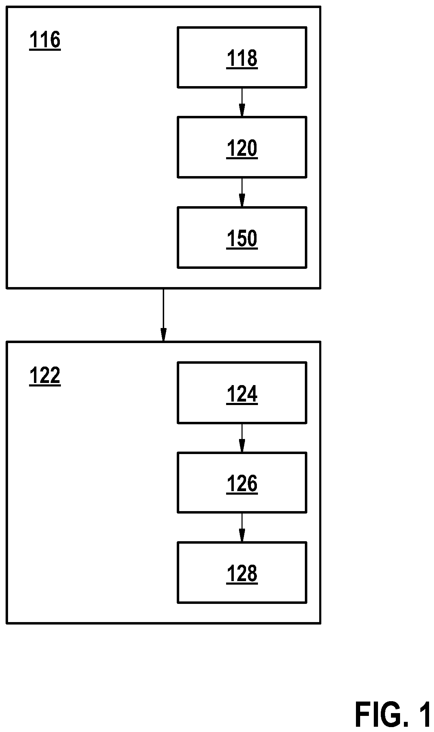

Die Figur 1 zeigt ein erfindungsgemäßes Verfahren zur Erfassung von Partikeln eines Messgases in einem Messgasraum. Das Verfahren verwendet mindestens ein Sensorelement 110, wobei das Sensorelement 110 mindestens eine Elektrodenstruktur 112 umfasst, wobei die Elektrodenstruktur 112 mindestens zwei Elektrodeneinrichtungen 114 aufweist. Das Verfahren umfasst die folgenden Schritte, bevorzugt in der angegebenen Reihenfolge. Auch eine andere Reihenfolge ist grundsätzlich möglich. Weiterhin können einer oder mehrere oder alle der Verfahrensschritte auch wiederholt durchgeführt werden. Weiterhin können zwei oder mehrere der Verfahrensschritte auch ganz oder teilweise zeitlich überlappend oder gleichzeitig durchgeführt werden. Das Verfahren kann, zusätzlich zu den genannten Verfahrensschritten auch weitere Verfahrensschritte umfassen.

Wie in Figur 1 gezeigt, umfasst das Verfahren in einem ersten Schritt a) (Verfahrensschritt 116) ein Betreiben des Sensorelements 110 in mindestens einem Messmodus. Der Verfahrensschritt 116 umfasst einen ersten Teilschritt a) i. (Verfahrensschritt 118) und einen zweiten Teilschritt a) ii. (Verfahrensschritt 120). Der Verfahrensschritt 118 umfasst ein Beaufschlagen der Elektrodenstruktur 112 mit mindestens einer Messspannung. Der Verfahrensschritt 120 umfasst ein Erfassen mindestens eines Messsignals an der Elektrodenstruktur 112, insbesondere eines einen Messstrom zwischen den Elektrodeneinrichtungen 114 quantifizierenden Messsignals, wobei das Messsignal durch die Partikel beeinflussbar ist. Wie ebenfalls in Figur 1 dargestellt, umfasst das Verfahren weiterhin in einem zweiten Schritt b) (Verfahrensschritt 122) ein Betreiben des Sensorelements 110 in mindestens einem Diagnosemodus. Der Verfahrensschritt 122 umfasst einen ersten Teilschritt b) i. (Verfahrensschritt 124), einen zweiten Teilschritt b) ii. (Verfahrensschritt 126) und einen dritten Teilschritt b) iii. (Verfahrensschritt 128). Der Verfahrensschritt 124 umfasst ein Beaufschlagen der Elektrodenstruktur 112 mit mindestens einer Diagnosespannung, wobei die Diagnosespannung kleiner ist als die Messspannung. Der Verfahrensschritt 126 umfasst ein Erfassen mindestens eines Diagnosesignals an der Elektrodenstruktur 112, insbesondere eines einen Diagnosestrom zwischen den Elektrodeneinrichtungen 114 quantifizierenden Diagnosesignals. Verfahrensschritt 128 umfasst ein Auswerten des Diagnosesignals durch Vergleich des Diagnosesignals mit mindestens zwei Diagnoseschwellwerten und ein Erzeugen mindestens einer Information bezüglich eines Defektzustands des Sensorelements 110.

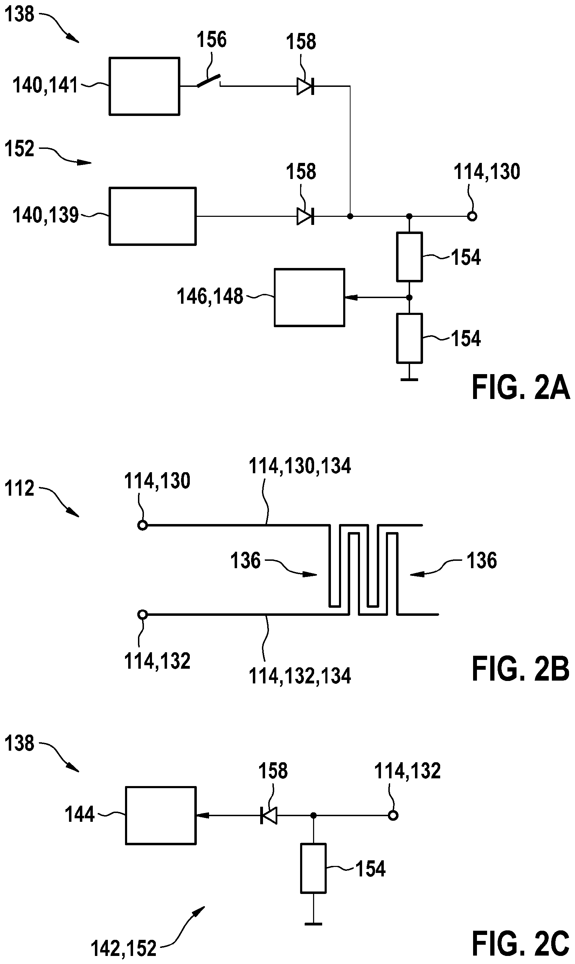

Wie in Figur 2B gezeigt, kann die Elektrodenstruktur 112 insbesondere genau zwei Elektrodeneinrichtungen 114 umfassen, welche insbesondere auch als erste Elektrodeneinrichtung 114, 130 und als zweite Elektrodeneinrichtung 114, 132 bezeichnet werden können. Insbesondere können die mindestens zwei Elektrodeneinrichtungen 114, insbesondere Teile davon, wie beispielsweise weiter unten noch näher beschriebene Elektrodenfinger 134, eine Anordnung zueinander aufweisen, welche ein wesentlicher Bestandteil der Elektrodenstruktur 112 sein kann. Weiterhin können die Elektrodeneinrichtungen 114 jeweils mindestens eine Elektrodenform 136 aufweisen, welche ebenfalls ein wesentlicher Bestandteil der Elektrodenstruktur 112 sein kann. Wie in Figur 2B zu sehen, kann die Elektrodeneinrichtung 114 insbesondere mindestens einen Elektrodenfinger 134 aufweisen. Der Elektrodenfinger 134 kann insbesondere eine Elektrodenfingerform 136 aufweisen. Beispielsweise kann die Elektrodenfingerform 136 mindestens eine Mäanderform aufweisen wie ebenfalls in Figur 2B dargestellt. Auch weitere Formen sind möglich, beispielsweise eine Schlangenform; eine S-Form; eine Windung; eine Biegung; eine Schleife, insbesondere eine offene oder geschlossene Schleife; eine Schlaufe, insbesondere eine offene oder geschlossene Schlaufe. Insbesondere kann die erste Elektrodeneinrichtung 114 eine Vielzahl von mindestens zwei ersten Elektrodenfingern 134 aufweisen und die zweite Elektrodeneinrichtung 132 kann eine Vielzahl von mindestens 2 zweiten Elektrodenfingern 134 aufweisen. Insbesondere können die Elektrodenfinger 134 der ersten Elektrodeneinrichtung 130 und die Elektrodenfinger 134 der zweiten Elektrodeneinrichtung 132 kammartig ineinander greifen.

Bei dem Messsignal kann es sich insbesondere um ein Stromsignal, ein Spannungssignal oder ein Widerstandssignal handeln. Auch andere elektrische Signale sind grundsätzlich denkbar. Insbesondere kann es sich bei dem Messsignal um ein einen Messstrom zwischen den Elektrodeneinrichtungen 114 quantifizierendes Messsignal handeln.

Das Verfahren umfasst das Beaufschlagen der Elektrodenstruktur 112 mit mindestens einer Diagnosespannung. Insbesondere kann die Diagnosespannung um mindestens einen Faktor 2, bevorzugt um mindestens einen Faktor 4, mehr bevorzugt um mindestens einen Faktor 5 und besonders bevorzugt um mindestens einen Faktor 10 geringer sein als die Messspannung. Insbesondere kann die Messspannung 20 V bis 100 V, bevorzugt 40 V bis 50 V, mehr bevorzugt 44 V bis 46 V und besonders bevorzugt 45,6 V betragen. Insbesondere kann die Diagnosespannung 3 V bis 10 V, bevorzugt 4 V bis 6 V und besonders bevorzugt 5 V betragen. Bei dem Diagnosesignal kann es sich insbesondere um ein Stromsignal, ein Spannungssignal oder ein Widerstandssignal handeln.

Das Diagnosesignal kann einen Rückschluss auf ein Vorliegen oder eine Abwesenheit mindestens eines Defekts in dem Sensorelement 110, beispielsweise in der Elektrodenstruktur 112, erlauben. Beispielsweise kann es sich bei dem Defekt um einen Defekt der Elektrodenstruktur 112 handeln, insbesondere um einen Kurzschluss zwischen den beiden Elektrodeneinrichtungen 114 oder zwischen einer Elektrodeneinrichtung 114 und einem weiteren Element, beispielsweise der Masse oder einem weiteren Element des Sensorelements 110 oder einem Element der Sensoranordnung 138 handeln. Insbesondere kann es sich bei dem Element der Sensoranordnung 138 um ein elektrisches Bauteil, insbesondere um eine Spannungsquelle 140, beispielsweise um eine Batterie eines Kraftfahrzeugs handeln. Weiterhin kann es sich bei dem Defekt insbesondere um eine Überladung der Elektrodenstruktur 112 mit Partikeln handeln. Bei dem Diagnosesignal kann es sich insbesondere um ein einen Diagnosestrom zwischen den Elektrodeneinrichtungen 114 quantifizierendes Diagnosesignal handeln. Insbesondere kann das Sensorelement 110, das einen Defektzustand aufweist, mindestens einen der oben bereits beschriebenen Defekte aufweisen.

Gemäß dem erfindungsgemäßen Verfahren wird die Elektrodenstruktur 112 mit der mindestens einen Messspannung beaufschlagt. Weiterhin wird die Elektrodenstruktur 112 mit der mindestens einen Diagnosespannung beaufschlagt. Zum Beaufschlagen der Elektrodenstruktur 112 mit der mindestens einen Messspannung und der mindestens einen Diagnosespannung kann die mindestens eine Spannungsquelle 140 verwendet werden. Zum Beaufschlagen der Elektrodenstruktur 112 mit der mindestens einen Messspannung und der mindestens einen Diagnosespannung können insbesondere mindestens zwei Spannungsquellen 140 verwendet werden. Insbesondere kann zum Beaufschlagen der Elektrodenstruktur 112 mit der mindestens einen Messspannung mindestens eine Messspannungsquelle 139 verwendet werden und zum Beaufschlagen der Elektrodenstruktur 112 mit der mindestens einen Diagnosespannung mindestens eine Diagnosespannungsquelle 141 verwendet werden, wie in Figur 2A anhand des dort gezeigten Ausschnitts der Sensoranordnung 138 veranschaulicht. Insbesondere kann die Sensoranordnung 138, wie ebenfalls dort zu sehen, mindestens eine Diode 158 in Serie mit der Messspannungsquelle 139 und mindestens eine Diode 158 in Serie mit der Diagnosespannungsquelle 141 aufweisen. Die Erfassung des Diagnosesignals kann damit hinter der Diode 158 erfolgen. Insbesondere kann dadurch gewährleistet sein, dass in einer derart ausgestalteten Ausführungsform das Diagnosesignal kleiner ist als die Diagnosespannung.

Zum Erfassen des Messsignals und des Diagnosesignals kann mindestens eine Messvorrichtung 142 verwendet werden, wobei die Messvorrichtung 142 mindestens einen Analog-Digital-Wandler 144 umfassen kann, wie in Figur 2C gezeigt. Insbesondere kann die Diagnosespannung kleiner oder gleich einem Maximalwert eines Erfassungsbereichs des Analog-Digital-Wandlers 144 sein. Insbesondere kann der Maximalwert des Erfassungsbereichs des Analog-Digital-Wandlers 144 5 V betragen. Alternativ kann der Maximalwert des Erfassungsbereichs des Analog-Digital-Wandlers 144 auch einen anderen Wert aufweisen. Insbesondere kann der Maximalwert des Erfassungsbereichs des Analog-Digital-Wandlers 144 beispielsweise 3,3 V betragen. Auch andere Werte sind grundsätzlich denkbar. Insbesondere kann der Maximalwert des Erfassungsbereichs des Analog-Digital-Wandlers 144 3 V bis 10 V, bevorzugt 4 V bis 6 V und besonders bevorzugt 5 V betragen. Insbesondere kann der Maximalwert des Erfassungsbereichs des Analog-Digital-Wandlers 144 5 V betragen und die Diagnosespannung kann 2,5 V bis 6 V, bevorzugt 3,5 V bis 5,5 V, besonders bevorzugt 4,0 V bis 4,3 V betragen.

Zum Erfassen einer Spannung an der ersten Elektrodeneinrichtung 130kann ferner mindestens eine weitere Messvorrichtung 146 verwendet werden. Die mindestens eine weitere Messvorrichtung 146 zur Erfassung der Spannung an der ersten Elektrodeneinrichtung 130 kann mindestens einen weiteren Analog-Digital-Wandler 148 umfassen, wie in Figur 2A dargestellt. Alternativ kann auch der Analog-Digital-Wandler 144 zur Erfassung der Spannung an der ersten Elektrodeneinrichtung 130, eingesetzt werden, wobei zur Erfassung der Spannung an der ersten Elektrodeneinrichtung 130, ein anderer als ein zur Erfassung des Diagnosesignals eingesetzter Kanal des Analog-Digital-Wandlers 144 verwendet werden kann.

Das Verfahren zur Erfassung von Partikeln eines Messgases in einem Messgasraum umfasst die oben aufgeführten Verfahrensschritte 116, 118, 120, 122, 124, 126 und 128. Insbesondere kann der Verfahrensschritt 122 ausgeführt werden, wenn das Messsignal in Verfahrensschritt 120 einen vorbestimmten Messsignalschwellwert überschreitet. Insbesondere kann der vorbestimmte Messsignalschwellwert im Wesentlichen gleich dem Maximalwert des Erfassungsbereichs des Analog-Digital-Wandlers 144 sein. Weiterhin kann der vorbestimmte Messsignalschwellwert 4,0 V bis 5,0 V oder 1 mA bis 10 mA oder 0 bis 100 k betragen.

Ferner kann das Verfahren vor Verfahrensschritt 122 weiterhin folgenden Teilschritt a) iii (Verfahrensschritt 150) umfassen. Der Verfahrensschritt 150 umfasst ein Vergleichen des Messsignals mit dem vorbestimmten Messsignalschwellwert und ein Erzeugen mindestens einer Information bezüglich eines Funktionszustands des Sensorelements 110. So kann das Sensorelement 110 über den Funktionszustand insbesondere als intakt oder als defekt eingeordnet werden. Insbesondere kann das Sensorelement 110 als intakt eingeordnet werden, wenn das Messsignal kleiner oder maximal gleich dem vorbestimmten Messsignalschwellwert ist. Ferner kann das Sensorelement 110 als defekt eingeordnet werden, wenn das Messsignal den vorbestimmten Messsignalschwellwert überschreitet.

Gemäß dem erfindungsgemäßen Verfahren wird die Elektrodenstruktur 112 mit der Messspannung beaufschlagt. Weiterhin kann das Messsignal mindestens ein Signal sein ausgewählt aus der Gruppe bestehend aus: einem Spannungssignal; einem Stromsignal; einem Widerstandssignal. Ferner kann auch das Diagnosesignal ausgewählt sein aus der Gruppe bestehend aus: einem Spannungssignal; einem Stromsignal; einem Widerstandssignal. Insbesondere kann das Diagnosesignal mindestens ein Signal umfassen ausgewählt aus der Gruppe bestehend aus: einem Spannungssignal oder einem Stromsignal oder einem Widerstandssignal zwischen einer der mindestens zwei Elektrodeneinrichtungen 114 und der Spannungsquelle 140, insbesondere der Messspannungsquelle 139, beispielsweise Batterie des Kraftfahrzeugs; einem Spannungssignal oder einem Stromsignal oder einem Widerstandssignal zwischen einer der beiden Elektrodeneinrichtungen 112 und der Masse; einem Spannungssignal oder einem Stromsignal oder einem Widerstandssignal zwischen den beiden Elektrodeneinrichtungen 112.

Das Verfahren zur Erfassung von Partikeln eines Messgases in einem Messgasraum umfasst den Schritt b) iii). Insbesondere können die mindestens zwei Diagnoseschwellwerte vorbestimmte Diagnoseschwellwerte sein. Weiterhin kann das Verfahren genau zwei Diagnoseschwellwerte umfassen. Insbesondere können die Diagnoseschwellwerte mit D1 und D2 bezeichnet werden. Insbesondere kann das Auswerten des Diagnosesignals in Schritt b) iii. ein Vergleichen des Diagnosesignals mit mindestens zwei vorbestimmten Diagnoseschwellwerten D1 und D2 umfassen. Insbesondere kann der Diagnoseschwellwert D1 größer sein als der Diagnoseschwellwert D2. Weiterhin können die Diagnoseschwellwerte D1 und D2 zwei Spannungswerte sein, wobei der Diagnoseschwellwert D1 kleiner oder gleich dem Maximalwert des Erfassungsbereichs des Analog-Digital-Wandlers 144 sein kann, wobei der Diagnoseschwellwert D2 kleiner als der Maximalwert des Erfassungsbereichs des Analog-Digital-Wandlers 144 und kleiner als der Diagnoseschwellwert D1 sein kann. Weiterhin kann das Erzeugen mindestens einer Information bezüglich des Defektzustands des Sensorelements 110 in Schritt b) iii. mithilfe des folgenden Schemas erfolgen:
- das Sensorelement 110 weist einen Kurzschluss zwischen der einen der mindestens zwei Elektrodeneinrichtungen 114 und der Spannungsquelle 140, insbesondere der Batterie des Kraftfahrzeugs, auf, wenn das Diagnosesignal größer ist als der Diagnoseschwellwert D1;
- das Sensorelement 110 weist einen Kurzschluss zwischen den beiden Elektrodeneinrichtungen 114 auf, wenn das Diagnosesignal zwischen D2 und D1 liegt; und
- das Sensorelement 110 weist eine Überladung der Elektrodenstruktur 112 mit den Partikeln auf, wenn das Diagnosesignal kleiner als der zweite Diagnoseschwellwert D2 ist.

Insbesondere können die Diagnoseschwellwerte D1 und D2 jeweils einem der durch sie begrenzten Bereiche zugeordnet werden. Insbesondere kann der Diagnoseschwellwert D1 4,5 V betragen und der Diagnoseschwellwert D2 kann 3,9 V betragen. In einem besonders bevorzugten Ausführungsbeispiel kann die Diagnosespannung gleich dem Maximalwert des Erfassungsbereichs des Analog-Digital-Wandlers 144 sein, der Maximalwert des Erfassungsbereichs des Analog-Digital-Wandlers 144 kann 5 V betragen, der Diagnoseschwellwert D1 kann 4,5 V betragen und der Diagnoseschwellwert D2 kann 3,9 V betragen.

In einem weiteren Aspekt der vorliegenden Erfindung wird eine Sensoranordnung 138 zur Erfassung von Partikeln eines Messgases in einem Messgasraum vorgeschlagen. Die Sensoranordnung138 umfasst mindestens ein Sensorelement 110 und mindestens eine Steuereinheit 152, wobei das Sensorelement 110 mindestens eine Elektrodenstruktur 112 umfasst. Die Elektrodenstruktur 112 weist mindestens zwei Elektrodeneinrichtungen 114 auf. Die Steuereinheit 152 ist eingerichtet, um ein Verfahren nach einem der vorhergehenden Ansprüche durchzuführen.

Wie in Figur 2A zu sehen, kann die Steuereinheit 152 mindestens eine Spannungsquelle 140 aufweisen, wobei die Spannungsquelle 140 eingerichtet sein kann, um die Elektrodenstruktur 112 mit der mindestens einen Messspannung und mit der mindestens einen Diagnosespannung zu beaufschlagen. Insbesondere kann die Steuereinheit 152 mindestens zwei Spannungsquellen 140, insbesondere mindestens eine Messspannungsquelle 139 und mindestens eine Diagnosespannungsquelle 141 aufweisen, wie in Figur 2A gezeigt. Wie in Figur 2C dargestellt, kann die Steuereinheit 152 weiterhin mindestens eine Messvorrichtung 142 aufweisen, wobei die Messvorrichtung 142 eingerichtet sein kann, um das Messsignal an der Elektrodenstruktur 112 zu erfassen. Insbesondere kann die Messvorrichtung 142 ferner eingerichtet sein, das Diagnosesignal der Elektrodenstruktur 112 zu erfassen. Die Elektrodenstruktur 112 kann eine erste Elektrodeneinrichtung 130 und eine zweite Elektrodeneinrichtung 132 umfassen. Die Messvorrichtung 142 kann mindestens einen mit der ersten Elektrodeneinrichtung 130 oder der zweiten Elektrodeneinrichtung 132 verbundenen Messwiderstand 154 und mindestens einen mit dem Messwiderstand 154 verbundenen Analog-Digital-Wandler 144 aufweisen, wie in Figur 2C gezeigt. Weiterhin kann die Steuereinheit 152 mindestens eine weitere Messvorrichtung 146 zum Erfassen der Messspannung aufweisen. Auch die weitere Messvorrichtung 146 kann mindestens einen Messwiderstand aufweisen.

Ferner kann die mindestens eine Spannungsquelle 140 mindestens ein Element aufweisen ausgewählt aus der Gruppe bestehend aus: einer Batterie; einem Aufwärtswandler; einem elektrischen Schalter 156. Die Spannungsquelle 140 kann ferner weitere Elemente, insbesondere elektrische Bauelemente, umfassen. Bei der Batterie kann es sich insbesondere um die Batterie eines Kraftfahrzeugs handeln. Der Schalter 156 kann insbesondere einen Transistor, einen Metal-Oxid-Semiconductor Field-Effect Transistor (MOSFET) oder ein Relais umfassen. Insbesondere kann die Elektrodeneinrichtung 114 durch dieselbe Spannungsquelle 140 mit der Messspannung und der Diagnosespannung beaufschlagbar sein. Weiterhin kann die Sensoranordnung 138, insbesondere die Steuereinheit 152, beispielsweise die Spannungsquelle 140, insbesondere die Messspannungsquelle 139 und/oder die Diagnosespannungsquelle 141, weitere, insbesondere auch hier nicht gezeigte, elektrische Bauelemente umfassen. Wie in den Figuren 2A und 2C gezeigt kann die Steuereinheit 152 mindestens eine Diode 158, insbesondere eine Vielzahl von Dioden 158 aufweisen.

## Patentansprüche

1. Verfahren zur Erfassung von Partikeln eines Messgases in einem Messgasraum, wobei mindestens ein Sensorelement (110) verwendet wird, wobei das Sensorelement (110) mindestens eine Elektrodenstruktur (112) umfasst, wobei die Elektrodenstruktur (112) mindestens zwei Elektrodeneinrichtungen (114) aufweist, wobei das Verfahren die folgenden Schritte umfasst:
a) Betreiben des Sensorelements (110) in mindestens einem Messmodus, umfassend:
i. Beaufschlagen der Elektrodenstruktur (112) mit mindestens einer Messspannung; und
ii. Erfassen mindestens eines Messsignals an der Elektrodenstruktur (112) wobei das Messsignal durch die Partikel beeinflussbar ist; und
iii. Vergleichen des Messsignals mit dem vorbestimmten Messsignalschwellwert und Erzeugen mindestens einer Information bezüglich eines Funktionszustands des Sensorelements (110), wobei das Sensorelement (110) als intakt eingeordnet wird, wenn das Messsignal kleiner oder maximal gleich dem vorbestimmten Messsignalschwellwert ist, wobei das Sensorelement (110) als defekt eingeordnet wird, wenn das Messsignal den vorbestimmten Messsignalschwellwert überschreitet;
und, wenn das Messsignal in Schritt a) ii. den vorbestimmten Messsignalschwellwert überschreitet, weiterhin die folgenden Schritte umfasst:
b) Betreiben des Sensorelements (110) in mindestens einem Diagnosemodus, umfassend:
i. Beaufschlagen der Elektrodenstruktur (112) mit mindestens einer Diagnosespannung, wobei die Diagnosespannung kleiner ist als die Messspannung;
ii. Erfassen mindestens eines Diagnosesignals an der Elektrodenstruktur (112); und
iii. Auswerten des Diagnosesignals durch Vergleich des Diagnosesignals mit mindestens zwei Diagnoseschwellwerten und Erzeugen mindestens einer Information bezüglich eines Defektzustands des Sensorelements (110);
wobei zum Erfassen des Messsignals und des Diagnosesignals mindestens eine Messvorrichtung (142) verwendet wird, wobei die Messvorrichtung (142) mindestens einen Analog-Digital-Wandler (144) umfasst, wobei die Diagnosespannung kleiner oder gleich einem Maximalwert eines Erfassungsbereichs des Analog-Digital-Wandlers (144) ist, und wobei das Erzeugen mindestens einer Information bezüglich des Defektzustands des Sensorelements in Schritt b) iii. mithilfe des folgenden Schemas erfolgt:
• das Sensorelement weist einen Kurzschluss zwischen der einen der mindestens zwei Elektrodeneinrichtungen und der Spannungsquelle, insbesondere der Batterie des Kraftfahrzeugs, auf, wenn das Diagnosesignal größer ist als der Diagnoseschwellwert D1;
• das Sensorelement weist einen Kurzschluss zwischen den beiden Elektrodeneinrichtungen auf, wenn das Diagnosesignal zwischen D2 und D1 liegt; und
• das Sensorelement weist eine Überladung der Elektrodenstruktur mit den Partikeln auf, wenn das Diagnosesignal kleiner als der zweite Diagnoseschwellwert D2 ist.

2. Verfahren nach dem vorhergehenden Anspruch, wobei der Maximalwert des Erfassungsbereichs des Analog-Digital-Wandlers (144) 5 V beträgt.

3. Sensoranordnung (138) zur Erfassung von Partikeln eines Messgases in einem Messgasraum, wobei die Sensoranordnung (138) mindestens ein Sensorelement (110) und mindestens eine Steuereinheit (152) umfasst, wobei das Sensorelement (110) mindestens eine Elektrodenstruktur (112) umfasst, wobei die Elektrodenstruktur (112) mindestens zwei Elektrodeneinrichtungen (114) aufweist, wobei die Steuereinheit (152) eingerichtet ist, um ein Verfahren nach einem der vorhergehenden Ansprüche durchzuführen.

4. Sensoranordnung (138) nach dem vorhergehenden Anspruch, wobei die Steuereinheit (152) mindestens eine Spannungsquelle (140) aufweist, wobei die Spannungsquelle (140) eingerichtet ist, um die Elektrodenstruktur (112) mit der mindestens einen Messspannung und mit der mindestens einer Diagnosespannung zu beaufschlagen.

5. Sensoranordnung (138) nach einem der beiden vorhergehenden Ansprüche, wobei die Steuereinheit (152) weiterhin mindestens eine Messvorrichtung (142) aufweist, wobei die Messvorrichtung eingerichtet ist, um das mindestens eine Messsignal an der Elektrodenstruktur (112) zu erfassen.

## Claims

1. Method for detecting particles of a measurement gas in a measurement gas compartment, wherein at least one sensor element (110) is used, wherein the sensor element (110) comprises at least one electrode structure (112), wherein the electrode structure (112) has at least two electrode devices (114), wherein the method comprises the following steps of:
a) operating the sensor element (110) in at least one measurement mode, comprising:
i) applying at least one measurement voltage to the electrode structure (112); and
ii) capturing at least one measurement signal at the electrode structure (112), wherein the measurement signal can be influenced by the particles; and
iii) comparing the measurement signal with the predetermined measurement signal threshold value, and generating at least one item of information relating to a functional state of the sensor element (110), wherein the sensor element (110) is classified as intact if the measurement signal is less than or at most equal to the predetermined measurement signal threshold value, wherein the sensor element (110) is classified as defective if the measurement signal exceeds the predetermined measurement signal threshold value;
and, if the measurement signal in step a) ii. exceeds the predetermined measurement signal threshold value, also comprises the following steps of:
b) operating the sensor element (110) in at least one diagnostic mode, comprising:
i. applying at least one diagnostic voltage to the electrode structure (112), wherein the diagnostic voltage is less than the measurement voltage;
ii. capturing at least one diagnostic signal at the electrode structure (112); and
iii. evaluating the diagnostic signal by comparing the diagnostic signal with at least two diagnostic threshold values, and generating at least one item of information relating to a defect state of the sensor element (110);
wherein at least one measurement apparatus (142) is used to capture the measurement signal and the diagnostic signal, wherein the measurement apparatus (142) comprises at least one analogue/digital converter (144), wherein the diagnostic voltage is less than or equal to a maximum value of a capture range of the analogue/digital converter (144), and wherein at least one item of information relating to the defect state of the sensor element is generated in step b) iii. with the aid of the following scheme:
• the sensor element has a short circuit between one of the at least two electrode devices and the voltage source, in particular the battery of the motor vehicle, if the diagnostic signal is greater than the diagnostic threshold value D1;
• the sensor element has a short circuit between the two electrode devices if the diagnostic signal is between D2 and D1; and
• the sensor element has overloading of the electrode structure with the particles if the diagnostic signal is less than the second diagnostic threshold value D2.

2. Method according to the preceding claim, wherein the maximum value of the capture range of the analogue/digital converter (144) is 5 V.

3. Sensor arrangement (138) for detecting particles of a measurement gas in a measurement gas compartment, wherein the sensor arrangement (138) comprises at least one sensor element (110) and at least one control unit (152), wherein the sensor element (110) comprises at least one electrode structure (112), wherein the electrode structure (112) has at least two electrode devices (114), wherein the control unit (152) is configured to carry out a method according to one of the preceding claims.

4. Sensor arrangement (138) according to the preceding claim, wherein the control unit (152) has at least one voltage source (140), wherein the voltage source (140) is configured to apply the at least one measurement voltage and the at least one diagnostic voltage to the electrode structure (112).

5. Sensor arrangement (138) according to one of the two preceding claims, wherein the control unit (152) also has at least one measurement apparatus (142), wherein the measurement apparatus is configured to capture the at least one measurement signal at the electrode structure (112) .

## Revendications

1. Procédé permettant de détecter des particules d'un gaz de mesure dans une chambre de gaz de mesure, dans lequel au moins un élément capteur (110) est utilisé, l'élément capteur (110) comprenant au moins une structure d'électrode (112), la structure d'électrode (112) présentant au moins deux dispositifs d'électrode (114), dans lequel le procédé comprend les étapes suivantes consistant à :
a) faire fonctionner l'élément capteur (110) dans au moins un mode de mesure, comprenant les étapes consistant à :
i. appliquer à la structure d'électrode (112) au moins une tension de mesure ; et
ii. détecter au moins un signal de mesure au niveau de la structure d'électrode (112), le signal de mesure pouvant être influencé par les particules ; et
iii. comparer le signal de mesure avec la valeur seuil de signal de mesure prédéterminée, et générer au moins une information concernant un état de fonctionnement de l'élément capteur (110), l'élément capteur (110) étant classé comme intact si le signal de mesure est inférieur ou au maximum égal à la valeur seuil de signal de mesure prédéterminée, l'élément capteur (110) étant classé comme défectueux si le signal de mesure dépasse la valeur seuil de signal de mesure ;
et si le signal de mesure à l'étape a) ii dépasse la valeur seuil de signal de mesure prédéterminée, comprenant en outre les étapes suivantes consistant à :
b) faire fonctionner l'élément capteur (110) dans au moins un mode de diagnostic, comprenant les étapes consistant à :
i. appliquer à la structure d'électrode (112) au moins une tension de diagnostic, la tension de diagnostic étant inférieure à la tension de mesure ;
ii. détecter au moins un signal de diagnostic au niveau de la structure d'électrode (112) ; et
iii. évaluer le signal de diagnostic en comparant le signal de diagnostic avec au moins deux valeurs seuil de diagnostic et en générant au moins une information concernant un état défectueux de l'élément capteur (110) ;
dans lequel au moins un dispositif de mesure (142) est utilisé pour détecter le signal de mesure et le signal de diagnostic, le dispositif de mesure (142) comprenant au moins un convertisseur analogique/numérique (144), dans lequel la tension de diagnostic est inférieure ou égale à une valeur maximale d'une zone de détection du convertisseur analogique/numérique (144), et dans lequel la génération d'au moins une information concernant l'état défectueux de l'élément capteur à l'étape b)iii est effectuée à l'aide du schéma suivant :
• l'élément capteur présente un court-circuit entre ledit un des au moins deux dispositifs d'électrode et la source de tension, en particulier la batterie du véhicule automobile, si le signal de diagnostic est supérieur à la valeur seuil de diagnostic D1 ;
• l'élément capteur présente un court-circuit entre les deux dispositifs d'électrode si le signal de diagnostic est compris entre D2 et D1 ; et
• l'élément capteur présente une surcharge de la structure d'électrode avec les particules si le signal de diagnostic est inférieur à la deuxième valeur seuil de diagnostic D2.

2. Procédé selon la revendication précédente, dans lequel la valeur maximale de la zone de détection du convertisseur analogique/numérique (144) est de 5 V.

3. Agencement de capteur (138) permettant de détecter des particules d'un gaz de mesure dans une chambre de gaz de mesure, l'agencement de capteur (138) comprenant au moins un élément capteur (110) et au moins une unité de commande (152), dans lequel l'élément capteur (110) comprend au moins une structure d'électrode (112), la structure d'électrode (112) présentant au moins deux dispositifs d'électrode (114), dans lequel l'unité de commande (152) est conçue pour exécuter un procédé selon l'une quelconque des revendications précédentes.

4. Agencement de capteur (138) selon la revendication précédente, dans lequel l'unité de commande (152) présente au moins une source de tension (140), la source de tension (140) étant conçue pour appliquer à la structure d'électrode (112) ladite au moins une tension de mesure et ladite au moins une tension de diagnostic.

5. Agencement de capteur (138) selon l'une des deux revendications précédentes, dans lequel l'unité de commande (152) présente en outre au moins un dispositif de mesure (142), dans lequel le dispositif de mesure est conçu pour détecter ledit au moins un signal de mesure au niveau de la structure d'électrode (112).
